# EUROPÄISCHE PATENTANMELDUNG

(11) **EP 3 470 272 A1**
(43) Veröffentlichungstag der Anmeldung: **17.04.2019**
(21) Anmeldenummer: 17196712.8
(22) Anmeldetag: 16.10.2017
(51) Int. Cl.: B60R 11/04, B60R 13/04

(54) **ZIERBLENDE FÜR EIN KRAFTFAHRZEUG UND KRAFTFAHRZEUG MIT ZIERBLENDE**

(71) Anmelder: DURA Operating, LLC, Auburn Hills, MI 48326 (US)
(72) Erfinder: Schulte, Martin, 58802 Balve (DE); Ruech, Carsten, 56322 Spay (DE)
(74) Vertreter: Bungartz Christophersen Partnerschaft mbB Patentanwälte

(57) **Zusammenfassung**

Die Erfindung betrifft eine Zierblende für die Befestigung an einem Karosserieteil (2) eines Kraftfahrzeugs (1) mit einem Blendenkörper (3), der eine, dem Karosserieteil (2) zugewandte Innenseite, einen vorderen Endbereich und einen hinteren Endbereich sowie eine äußere Zierseite aufweist und an dem Karosserieteil (2) oder einem Anbauteil des Karosserieteils (2) des Kraftfahrzeugs (1) befestigbar ist, wobei der Blendenkörper (3) derart ausgebildet ist, dass bei bestimmungsgemäßer Montage an dem Kraftfahrzeug (1) ein Aufnahmeraum hinter der Innenseite verbleibt.

Die bekannten Zierblenden für Kraftfahrzeuge haben den Nachteil, dass sie oft keine Integrationsmöglichkeit für Sensoren der Fahrdynamikregelung oder der Assistenzsysteme bieten. Die verbessert die Erfindung dadurch, dass der den Aufnahmeraum begrenzende Bereich des Blendenkörpers (3) im vorderen oder hinteren Endbereich des Blendenkörpers (3) vorgesehen ist und der Blendenkörper (3) derart ausgebildet ist, dass aus dem Aufnahmeraum die Umgebung des Endbereichs zumindest teilweise sichtbar ist, wobei in dem Aufnahmeraum eine Kamera (6) angeordnet ist, deren Blickrichtung durch den Endbereich gerichtet ist.

## Beschreibung

Die Erfindung betrifft eine Zierblende für ein Kraftfahrzeug nach dem Oberbegriff des Anspruchs 1. Insbesondere betrifft die Erfindung eine Zierblende für die Befestigung an einem bevorzugt seitlichen Karosserieteil eines Kraftfahrzeugs mit einem Blendenkörper, der eine, dem Karosserieteil zugewandte Innenseite, einen vorderen Endbereich und einen hinteren Endbereich sowie eine äußere Zierseite aufweist. Der Blendenkörper kann unmittelbar dem Karosserieteil oder mittelbar einem Anbauteil des Karosserieteils des Kraftfahrzeugs befestigt werden und ist derart ausgebildet, dass bei bestimmungsgemäßer Montage an dem Kraftfahrzeug ein Aufnahmeraum hinter der Innenseite, innerhalb eines Aufnahmeraums in der Struktur des Blendenkörpers selbst oder hinter dem gesamten Blendenkörper verbleibt. Ferner betrifft die Erfindung ein Kraftfahrzeug mit einer solchen Zierleiste.

Derartige Zierblenden für Kraftfahrzeuge sind allgemein bekannt und werden zum Beispiel als Abdeckung des Fensterschachtes zwischen der Scheibe eines zu öffnenden Fensters des Kraftfahrzeuges und dem angrenzenden Blechbereich der Tür verwendet. Die Erfindung ist allerdings auch in Verbindung mit Zierblenden in anderen Bereichen des Kraftfahrzeugs, beispielsweise in Verbindung mit Abdeckungen bzw. Verzierungen unterhalb eines nicht zu öffnenden Fensters, in Verbindung mit Zierblenden zur Abdeckung der A-, B-, oder C-Säule oder auch mit quer verlaufenden Zierblenden im Heckbereich des Kraftfahrzeugs verwendbar. Auch eine Anwendung in Verbindung mit Zierblenden, die sich im Dachbereich oder Türstoßschutzleisten an der Unterkante des Türaußenblechs befinden, ist beispielsweise möglich. Eine weitere Anwendung können um den Stoßfänger herumgezogene Zierleisten sein, die mit einem Endberech längs der Seitenfläche der Karosserie verlaufen.

Unter dem Begriff Zierblende soll dabei im weitesten Sinne jede auf die Karosserie aufgebrachte Leiste verstanden werden, auch wenn diese eine weitere Funktion erfüllt, beispielsweise als Regenschutzleiste oder sogar als Teil einer Dach-Reeling.

Die bekannten Zierblenden weisen in vielen Fällen keine Möglichkeit auf, zusätzliche Funktionselemente der Fahrzeugsensorik aufzunehmen. Für den Heckbereich eines Kraftfahrzeugs sind Zierblenden bekannt, in die die Rückfahrkamera integriert ist. Hierzu ist bei diesem Zierblenden ein schwenkbares Lagerelement vorgesehen, dass die Rückfahrkamera aufnimmt und Einlegen des Rückwärtsganges hochgeklappt wird, so dass der hinter dem Fahrzeug befindliche Fahrbahnbereich für die Rückfahrkamera sichtbar wird. Diese Zierblenden ermöglichen zwar die Integration einer Kamera, haben aber den Nachteil, dass sie nur in Verbindung mit der Rückfahrkamera und der Beobachtung des hinteren Bereiches des Kraftfahrzeugs einsetzbar sind.

Aufgabe der Erfindung ist es daher, eine Zierblende für ein Kraftfahrzeug zu schaffen, die eine höhere Integrationsmöglichkeit für die Sensorik von Fahrzeugassistenten bei möglichst weitem Anwendungsbereich aufweist. Eine weitere Aufgabe der Erfindung besteht darin, ein Kraftfahrzeug mit einer derartigen Zierblende zu schaffen. Insbesondere sollen die neue Zierblende bzw. das hiermit ausgestattete Kraftfahrzeug auch andere Bereiche als den rückwärtigen Bereich des Kraftfahrzeugs mittels einer zu integrierenden Sensorik erfassen können.

Diese Aufgabe wird erfindungsgemäß hinsichtlich der Zierblende durch eine Zierblende nach Anspruch 1 gelöst. Bei dieser Zierblende ist der den Aufnahmeraum begrenzende Bereich des Blendenkörpers im vorderen oder hinteren Endbereich des Blendenkörpers vorgesehen und der Blendenkörper ist derart ausgebildet, dass aus dem Aufnahmeraum die Umgebung des Endbereichs zumindest teilweise sichtbar ist. Um das gewünschte Bild aufnehmen zu können, ist entweder in dem Aufnahmeraum eine Kamera oder eine Aufnahmeoptik für eine Kamera angeordnet, wobei im letztgenannten Fall das Bild über die Aufnahmeoptik und gegebenenfalls weitere optische Mittel, wie zum Beispiel einem Lichtwellenleiter, auf die Kamera übertragen wird. Die Blickrichtung der Kamera oder der Aufnahmeoptik ist durch den Randbereich des Blendenkörper gerichtet ist.

Bezüglich des Kraftfahrzeugs wird die Aufgabe durch ein Kraftfahrzeug nach Anspruch 11 gelöst, das wenigstens eine Zierblende der oben beschriebenen Art aufweist.

Durch die erfindungsgemäße Ausgestaltung der Zierblende wird es nun möglich, insbesondere auch den Seitenbereich oder weitere Bereiche vor, neben oder hinter dem Kraftfahrzeug über eine integrierte Sensorik zu erfassen. Hierzu ist die Zierblende mit ihrem Blendenkörper derart ausgebildet, dass bei bestimmungsgemäßer Montage der Zierblende an einem Kraftfahrzeug zwischen dem Blendenkörper und der Außenhaut des Kraftfahrzeugs der Aufnahmeraum verbleibt.

Alternativ kann der Aufnahmeraum, geschlossen oder in Form einer Einbuchtung bzw. Ausnehmung zumindest einseitig offen, auch in der Struktur des Blendenkörpers ausgebildet sein. In dem Aufnahmeraum kann dann zumindest eine Kamera oder eine Optik angeordnet werden, wobei über die Optik das Bild auf eine oder mehrere Kameras abgebildet wird. Damit diese Kamera einen Bereich außerhalb des Kraftfahrzeugs erfassen kann, ist natürlich der Blendenkörper so gestaltet, dass er den Sichtbereich der Kamera nicht beeinträchtigt.

Die Kamera kann grundsätzlich am Blendenkörper oder auch am Kraftfahrzeug montiert sein. In beiden Fällen wird die Karosserie des Kraftfahrzeugs eine Schnittstelle aufweisen, über die die Kamera kontaktierbar ist. Der Blendenkörper kann so gestaltet sein, dass die Kamera auch bei feststehendem Blendenkörper einen ausreichenden Erfassungsbereich überblicken kann. Hierzu kann beispielsweise der Blendenkörper nach außen mit einem höckerartigen Bereich hervorspringen, so dass das Objektiv der Kamera aus der ansonsten eher ebenen Oberfläche des Blendenkörpers herausragt, um so eine Rundumsicht für die Kamera zu schaffen.

Auch das Herausfahren eines Kamerahalters mit der Kamera oder der Kamera selbst aus dem Blendenkörper ist möglich. Herbei ist die Kamera quer zur Fahrrichtung beweglich im Blendenkörper gelagert oder an einem Kameraträger angeordnet, der seinerseits beweglich im Blendenkörper gelagert ist. Bei Ausgestaltungen, bei denen die Lagerung am Endbereich des Blendenkörpers angeordnet ist, ist die Kamera bzw. der Kameraträger nicht hinter dem Ende des Blendenkörpers ausfahrbar. Dann kann der Blendenkörper eine Durchgangsöffnung aufweisen, durch die Kamera elektromotorisch nach außen bewegt werden kann. In diesem Fall kann die Kamera auch drehbar an dem Kameraträger gelagert sein, so dass der erfasste Bildbereich hinter, vor oder seitlich neben dem Fahrzeug liegen kann. Dies kann automatisch eingestellt werden, zum Beispiel in Abhängigkeit der Fahrgeschwindigkeit, des gewählten Gangs bzw. Fahrtrichtung oder anderer Faktoren, insbesondere den Resultaten der Tätigkeit anderer Assistenten.

Sofern die insbesondere feststehende Kamera einen Bereich hinter dem Blendenkörper erfassen soll, kann der Blendenkörper auch abgeschrägt sein, so dass die Kamera bevorzugt leicht schräg gestellt werden kann, um hierdurch in einem Winkel zur Fahrtrichtung angeordnet zu werden. Bei entsprechendem, von der Kamera erfassbarem Winkelbereich kann die Kamera so einen Bereich zwischen einer zur Fahrtrichtung des Kraftfahrzeugs parallelen Richtung oder auch einer leicht einwärts gerichteten Richtung und einer im Winkel hierzu nach außen verlaufenden Richtung erfassen. Dieser Winkel kann je nach Anwendungswunsch individuell gewählt werden, bevorzugt erfasst er den Fern- und/oder Nahbereich des Kraftfahrzeugs. So kann bei einer möglichen Anwendung der Erfindung der Winkel in einer horizontalen Ebene zwischen 0° und 90° liegen, bevorzugt zwischen 0° und 60° bzw. 0° und 55°.

Der erfindungsgemäße Grundgedanke kann zur Optimierung von unterschiedlichsten Funktionen der Fahrdynamikregelung, des autonomen Fahrens oder sonstiger Fahrerassistenz- oder Informationssysteme genutzt werden. Beispielhafte, aber nicht abschließend aufgezählte Anwendungen sind die Erfassung des hinteren, seitlichen Bereichs des Kraftfahrzeugs in Verbindung mit Totwinkel- oder Spurwechselassistenten, Assistenten zur Ermittlung von Unfallgefahren oder auch Assistenten im Zusammenhang mit dem teilautonomen oder vollständig autonomen Fahren. Der Blickwinkel der Kamera kann nicht nur nach hinten, sondern auch nach unten gerichtet sein, so dass mit der Kamera auch der Bereich direkt unter dem Kraftfahrzeug erfasst werden kann. Ferner kann in Verbindung mit quer verlaufenden Zierblenden die Blickrichtung der Kamera auch zur Seite gerichtet sein.

Besonders vorteilhaft ist die Erfindung umsetzbar, wenn der Blendenkörper schwenkbar am Karosserieteil gelagert ist. Bei einer beispielhaften Anwendung der Erfindung ist der Blendenkörper im vorderen Bereich der Tür gelenkig gelagert, so dass der hintere Bereich des Blendenkörpers nach außen geschwenkt werden kann. Dies erfolgt bevorzugt mit elektromotorischer Betätigung, wobei hier eine Feder vorgesehen sein kann, die den Blendenkörper nach außen treibt und der Elektromotor über ein Zugmittel zur Deaktivierung der Kamera und zum Anlegen des Blendenkörpers an das Karosserieteil den Blendenkörper nach innen zu ziehen vermag. Auch ein reiner elektromotorischer Stellantrieb ist natürlich möglich.

Durch das seitliche Ausstellen des hinteren Bereichs des Blendenkörpers ragt das Sichtfenster der Kamera seitlich heraus und der von der Kamera einsehbare Bereich kann deutlich vergrößert werden. Der Blendenkörper ist dann bevorzugt in einem Schwenklager an der Karosserie gelagert. Eine hintere Führungsstange kann die Lagerung zusätzlich stabilisieren, wobei diese dann insbesondere das Gewicht der Kamera bzw. der Optik in vertikaler Richtung aufzunehmen vermag. Durch die Bewegung der Kameralinse kann nun die Kamera einen parallel zur Fahrtrichtung oder sogar auch einen nach innen gerichteten Erfassungsbereich abdecken.

Die Vergrößerung des Blickwinkels kann zur Beobachtung des Umfeldes genutzt werden, um beispielsweise beim Öffnen der Tür über einen entsprechenden Assistenten vor herannahenden Fahrzeugen, Fahrradfahrern oder Fußgängern oder auch Hindernissen im Bewegungsbereich der Tür zu warnen. Ferner kann die Kamera auf diese Weise genutzt werden, um eventuelle Unfallfolgen abzumildern. Hierzu kann zum Beispiel über einen entsprechend eingerichteten Assistenten ein Notfallprogramm aufgerufen werden, das ein Schließen der Scheiben und gegebenenfalls des Schiebedaches, ein Spannen der Sicherheitsgurte und ein Aufrechtstellen der Rücklehnen oder ähnliche Maßnahmen auslösen kann.

Schließlich kann die Kamera auch genutzt werden, um zum Beispiel das Fahrverhalten eines Anhängers zu kontrollieren und über die Fahrdynamikregelung zu beeinflussen. So kann beispielsweise die Kamera ein Pendeln des Anhängers durch Überwachen der Bewegung der Flanken des Anhängers ermitteln, wobei diese Pendelbewegung dann als Regelgröße für die Fahrdynamikregelung genutzt wird, die beispielsweise über ein selektives Abbremsen eines der Hinterräder oder über Lenkbewegungen ein entgegenwirkendes Giermoment aufbringt. Schließlich kann die Kamera genutzt werden, um zusätzlich zum Rückspiegel oder auch anstelle des Rückspiegels dem Fahrer über ein Display den Blick nach hinten anzuzeigen.

Grundsätzlich wäre es für die Funktion ausreichend, wenn zwischen der Innenseite des Blendenkörpers und dem Karosserieteil oder im Blendenkörper der Aufnahmeraum freibleibt, in dem die Kamera angeordnet werden kann. So kann die Kamera beispielsweise auch in einem als Kameragehäuse dienenden, offenen oder geschlossenen Bereich des Blendenkörpers hinter der Zierseite des Blendenkörpers vorgesehen sein, wobei dieses Kameragehäuse dann ein Sichtfenster aufweist, durch das die Kamera nach außen blicken kann. Das Kameragehäuse kann auch als separates Gehäuse ausgebildet sein, so dass sich der Blendenkörper dann aus einem vorderen Zierabschnitt und einem hinteren, das Kameragehäuse bildenden Teil zusammensetzt.

In allen Fällen kann die Kamera ein Weitwinkel- oder Fischaugenobjektiv aufweisen. Auch eine einstellbare Brennweite ist möglich, um weiter entfernt liegende Bereiche auf Wunsch heranzoomen oder unterschiedlich weit entfernt liegende Bereich bei räumlich veränderlicher Kamera fokussieren zu können. Schließlich können auch eine oder weitere Kameras vorgesehen sein, die einen anderen Blickwinkel abdecken. So kann beispielsweise die erste Kamera nach vorne oder hinten gerichtet sein, während eine zweite Zusatzkamera dem Bereich unterhalb der Zierblende erfasst. Dies kann genutzt werden, um entweder dem Fahrer den Bereich vor der Tür anzuzeigen, einen Parkassistenten zu unterstützen oder um vor oder während der Öffnung der Tür vor herannahenden bzw. im Schwenkbereich der Tür befindlichen Gefahren und Hindernissen zu warnen.

Schließlich können die Kameras auch genutzt werden, um das Umfeld während des Betrieb des Kraftfahrzeugs zu beobachten und aufzuzeichnen - sofern dies nach nationalen Regelungen zulässig ist - um im Unfallfalle oder einer anderen Situation, in der der Fahrer möglicherweise eines Fehlverhaltens beschuldigt werden könnte, die Schuldfrage klären zu können. Eine solche Funktion ist in einigen Staaten wegen des Rechtes am eigenen Bild der übrigen Verkehrsteilnehmer nicht zulässig, so dass die Aktivierung der Aufzeichnungsfunktion ortsabhängig und selbsttätig von einer Steuerung vorgenommen werden kann, die beispielsweise die GPS-Daten und eine Datenbank nutzt, in der länderspezifisch die Zulässigkeit einer Bilddatenspeicherung hinterlegt ist.

Die Kamera kann auf normaler Tageslichtbasis in dem für das menschliche Auge sichtbaren Wellenlängenbereich arbeiten. Dies hat jedoch den Nachteil, dass die Kamera während der Dunkelheit und durch Blendung der nachfolgenden Fahrzeuge nur eine eingeschränkte Information wird wiedergeben können. Daher weist eine bevorzugte Ausgestaltung der Erfindung eine Kamera auf, die auf Infrarotbasis arbeitet, was zum einen das Herausfiltern des blendenden Lichts der Scheinwerfer der rückwärtigen Fahrzeuge erleichtert und zum anderen auch eine Nachtsichtfunktion bereitstellt. Ferner können warme Objekte, wie Fußgänger oder Radfahrer, leichter erkannt und identifiziert werden.

Über eine aus den bekannten Nachtsichtassistenten bereits genutzte Software können Fußgänger, Radfahrer oder sonstige gefährdete Objekte im Bild, das von der Kamera aufgenommen wird, identifiziert werden und dem Fahrer akustisch oder visuell als Gefahr angezeigt werden. Bevorzugt wird das Bild der Kamera in ein Informationssystem für den Fahrer integriert, das beispielsweise ein Bildschirm im Armaturenbrett, ein Head-Up-Display oder auch eine weitere Darstellungsmöglichkeit umfassen kann.

Weitere Darstellungsmöglichkeiten können zum Beispiel in Form eines kleinen Bildschirms rechts und/oder links neben dem Innenspiegel oder ober- und/oder unterhalb des Innenspiegels oder auch in Form eines oder mehrerer Displays im Bereich des Außenspiegels ausgebildet sein. Auch eine Wiedergabe nach der Art eines Head-Up-Displays im Fenster der zu öffnenden Tür oder im Bereich unterhalb des Fensters über ein dort positioniertes Display ist möglich. Letzteres bietet sich insbesondere an, wenn vor Gefahren durch Öffnen der Tür gewarnt werden soll, da die Gefahr auslösende Person beim Öffnen entsprechende Hinweise im Sichtfeld erhält. Alternativ oder zusätzlich kann auch ein akustischer Alarm erfolgen.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine Ansicht einer Tür eines Kraftfahrzeugs mit erfindungsgemäßer Zierblende,
- Fig. 2: den Bereich mit der Kamera der in Figur 1 dargestellten Tür in vergrößerter Darstellung,
- Fig. 3: eine Ansicht von oben auf das Kraftfahrzeug mit einer Darstellung des Blickwinkels der Kamera,
- Fig. 4: eine schematische Draufsicht auf hinteren Teil einer Tür eines Kraftfahrzeugs mit schwenkbarer Zierblende als Schachtabdeckung des Fensters,
- Fig. 5: eine Detailansicht einer zur Ausgestaltung nach Figur 4 ähnlichen Zierblende mit einer abziehenden Reinigungsvorrichtung und
- Fig. 6: eine alternative Ausgestaltung einer Zierblende mit einer anderen Reinigungsvorrichtung.

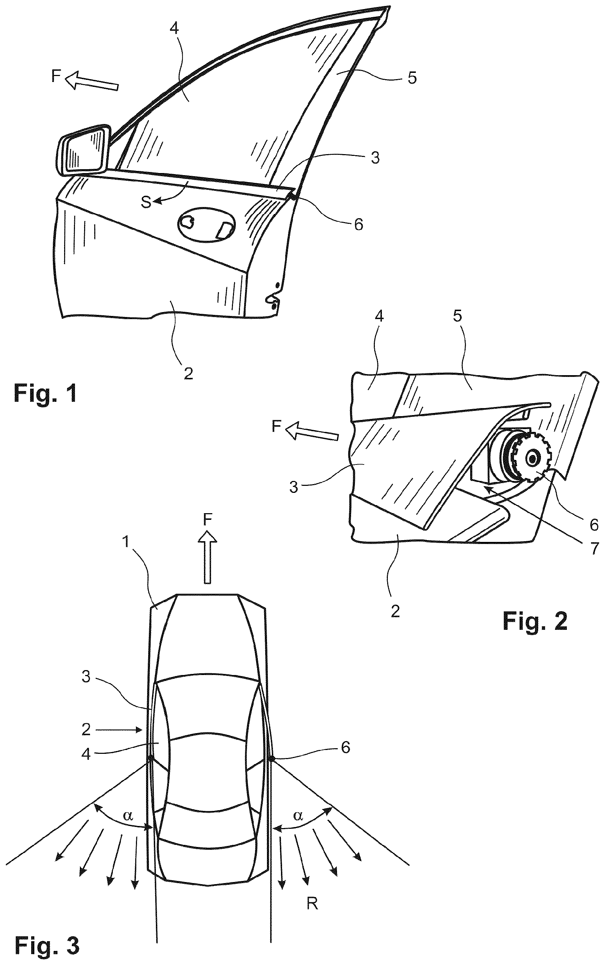

In Figur 1 ist ein Karosserieteil 2 als Teil eines schematisch in Figur 3 dargestellten Kraftfahrzeugs 1 gezeigt, das hier von der Fahrertür des Kraftfahrzeugs 1 gebildet ist. Dies ist eine bevorzugte Anwendung der Erfindung, die allerdings hierauf nicht eingeschränkt ist. Das Karosserieteil 2 weist ein Fenster auf, das über eine verschiebbare Scheibe 4 verschließbar ist. Zwischen der Oberseite der Fensterfläche und dem angrenzenden Blechbereich des Karosserieteils 2 befindet sich ein Fensterschacht, in den die Scheibe 4 beim Öffnen des Fensters absinkt. Dieser Fensterschacht ist, wie auch bei vielen bereits bekannten Kraftfahrzeugen, von einem Blendenkörper 3 abgedeckt. Der Bereich hinter der Scheibe 4 ist über eine vertikale Blende 5 verkleidet.

Erfindungsgemäß sind nun der Blendenkörper 3 und/oder die Struktur des Karosserieteils 2 derart ausgebildet, dass bei der hier dargestellten Ausgestaltung der Erfindung zwischen der Innenseite des Blendenkörpers 3 und dem Karosserieteil 2 ein Aufnahmeraum 7 verbleibt, in dem zumindest eine Kamera 6 angeordnet ist. Im dargestellten Ausführungsbeispiel ist dies eine Kamera 6, die mit ihrer Blickrichtung R entgegen der Fahrtrichtung F des Kraftfahrzeugs 1 nach hinten gerichtet ist.

Da die Kamera 6 einen möglichst großen Erfassungsbereich aufweisen soll, ist der Blendenkörper 3 der Zierblende in eine Schwenkrichtung S schwenkbar an dem Karosserieteil 2 angeordnet. Dies ermöglicht es, dass die Kamera 6, die in diesem Fall dann bevorzugt an dem Blendenkörper 3 befestigt ist, zusammen mit dem Blendenkörper 3 nach außen bewegt, insbesondere verschwenkt werden kann, so dass sich der von der Kammer erfasste und von ihr sichtbare Bereich insbesondere in Richtung der Außenhaut des Kraftfahrzeugs 1 vergrößert und, wenn gewünscht, auch die Seitenfläche des Kraftfahrzeugs darstellbar wird.

Eine hier nicht dargestellte Ausführungsform der Erfindung umfasst eine Zierblende, die einen Aufnahmeraum 7 innerhalb ihrer eigenen Struktur aufweist, in dem die Kamera 6 montiert werden kann. Dieser innere Aufnahmeraum 7 kann ein geschlossener Raum oder auch nur eine Aufnahme im Körper des Blendenkörpers 3 sein. Sofern es sich um einen geschlossenen Raum handelt, muss natürlich ein Sichtfenster vorgesehen sein, durch das die Kamera 6 den gewünschten Bereich abdecken kann. Dieses Sichtfenster kann auch von dem Objektiv der Kamera 6 selbst gebildet sein, so dass die Kamera 6 dann den geschlossenen Raum abschließt.

In die Figuren 2 bis 4 ist die in Figur 1 dargestellte Ausführungsform des schwenkbaren Blendenkörpers 3 mit hinter dem Blendenkörper 3 integrierter Kamera 6 in weiteren Details und vergrößerten Darstellungen wiedergegeben.

Wie aus Figur 2 erkennbar ist und oben bereits beschrieben wurde, ist bei dieser Ausgestaltung der Blendenkörper 3 so geformt, dass zwischen dem Karosserieteil 2, hier der Tür des Kraftfahrzeugs 1, ein Aufnahmeraum 7 frei bleibt, der es ermöglicht, dass auf der Innenseite des Blendenkörpers 3 die Kamera 6 befestigt werden kann. Dies ist allerdings nur eine schematische Ansicht der Grundfunktion, die Kamera 6 kann sowohl am Karosserieteil 2 als auch in einem größeren Volumen des Blendenkörpers 3 integriert sein.

Die Befestigung am Blendenkörper 3 hat den Vorteil, dass die Kamera 6 bei Verschwenken des Blendenkörpers 3 in Schwenkrichtung S automatisch mit herausgeschwenkt wird, ohne dass eine weitere Antriebsmotorik notwendig wäre. Alternativ zum hier dargestellten Ausführungsbeispiel können natürlich die Kamera 6 und der für sie vorgesehene Aufnahmeraum 7 auch in der vertikalen Blende 5 vorgesehen werden, wobei diese vertikale Blende 5 dann, alternativ oder kumulativ, sowohl relativ zur Hochachse des Kraftfahrzeugs 1 als auch relativ zur Fahrtrichtung des Kraftfahrzeugs 1 schwenkbar sein kann.

In allen Fällen kann natürlich sowohl der Blendenkörper 3 bzw. die vertikale Blende 5 und auch die sonstigen Teile des Kraftfahrzeugs 1 in Blickrichtung R der Kamera 6 so geformt sein, dass eine Schwenkbewegung des Blendenkörpers 3 nicht notwendig ist. Letztlich hängt dies von dem Design des Kraftfahrzeugs 1 ab.

Figur 3 verdeutlicht den Blickwinkel α der in Figur 1 bzw. Figur 2 dargestellten Kamera 6. Hier ist auf beiden Seiten des Kraftfahrzeugs 1 jeweils eine Zierleiste mit einer Kamera 6 im Türbereich vorgesehen, wobei in Fahrtrichtung F gesehen auf der rechten Seite des Kraftfahrzeugs 1 der Blendenkörper 3 nach außen geschwenkt dargestellt ist. Dieses Schwenken des Blendenkörpers 3 kann bei Erreichen einer gewissen Minimalgeschwindigkeit des Kraftfahrzeugs 1 automatisch und selbsttätig erfolgen, wobei die Aktivierung der Kamera 6 von der Schwenkbewegung abhängig gemacht werden kann. So kann die Kamera 6 bei ausklappendem Blendenkörper 3, wie es von einer Rückfahrkamera bekannt ist, selbsttätig aktiviert werden.

Während die Ausführungsform des Karosserieteils 2 bzw. Kraftfahrzeugs 1 nach Figur 1 noch einen klassischen Rückspiegel zeigt, wurde bei der Ausführungsform nach Figur 3 hierauf verzichtet. Dies hat seinen Grund darin, dass insbesondere aus aerodynamischen Gründen und aus Designgründen die Funktion des Rückspiegels von der Kamera 6 übernommen werden kann. Dies ist eine weitere bevorzugte Anwendung der Erfindung und ist insbesondere auch im Zusammenhang mit einem vollständig autonomen oder teilautonomen Fahren sinnvoll, da hier zum einen der Rückspiegel für den Fahrer an Bedeutung verliert und zum anderen die Erfassung des rückwärtigen Bildes und die Information des Fahrers über eine gemeinsame Sensorik in Form der Kamera 6 erfolgen kann.

Wie aus Figur 3 erkennbar ist, sind bei der dargestellten Ausführungsform der Erfindung der Blickwinkel α und die Blickrichtung R der Kamera 6 nach hinten gerichtet. Der Blickwinkel α ist hier exemplarisch mit ca. 55° zwischen einer zur Fahrtrichtung F parallelen oder alternativ leicht nach innen gerichteten Richtung und einer seitlich nach außen abgewinkelten Richtung eingestellt. Dieser Blickwinkel α kann natürlich abhängig vom Kameraobjektiv, von der gewünschten Funktion der Kamera 6 und der Karosserieform variiert werden.

Insbesondere durch das Verschwenken des Blendenkörpers 3 nach außen ist es auch möglich, dass die Kamera 6 sogar um einen geringen Winkel von außen nach innen auf die Außenhaut des Kraftfahrzeugs 1 zu blicken vermag. Dies hat weiterhin dann einen großen Vorteil, wenn die Kamera 6 genutzt wird, um einen am Kraftfahrzeug 1 angehängten Anhänger zu überwachen und gegebenenfalls eine Pendelbewegung dieses Anhängers zu ermitteln, damit die Fahrdynamikregelung des Kraftfahrzeugs 1 entsprechende Gegenmaßnahmen durch Aufbringen eines dem Pendeln entgegenwirkenden Giermoments oder auch nur durch Empfehlen einer Geschwindigkeitserhöhung für den Fahrer einleiten kann.

Die Kamera 6 kann ihrerseits gelenkig, am Blendenkörper 3 oder gegebenenfalls am Karosserieteil 2, gelagert sein oder in sich in der Blickrichtung R verstellbar sein. Auch der Schwenkwinkels kann in Abhängigkeit von der gewünschten Blickrichtung R variiert werden.

Die beschriebenen Funktionen können genutzt werden, um in Abhängigkeit der gewünschten Funktion und der Fahrsituation unterschiedliche Blickwinkel α und/oder Blickrichtungen R bereitstellen zu können. So kann zum Beispiel beim Einparken ein anderer Bereich von der Kamera 6 abgedeckt werden als beim Fahren auf einer Straße. Während des Einparkvorganges ist der Nahbereich sehr viel interessanter, so dass hier der Blickwinkel durch entsprechende Einstellung der Kamera 6, des Objektivs der Kamera 6 oder auch durch eine Vergrößerung des Schwenkwinkels S verändert werden kann.

Im Extremfall ist es sogar möglich, dass die Kamera 6 um 90° nach unten verdreht wird, so dass während des Einparkens der Bereich unterhalb des Fensters erfasst wird, während bei der Fahrt der Bereich hinter dem Kraftfahrzeug 1 erfasst werden kann. Gleichzeitig kann auch die Brennweite der Kamera 6 verändert werden, was bevorzugt durch eine selbsttätige Einstellung erfolgt, so dass sich auch bei unterschiedlichen Entfernungen des aufzunehmenden Ziels ein scharfes und deutliches Bild ergibt.

Die oben beschriebenen Veränderungen des Blickwinkels α oder der Blickrichtung R der Kamera 6 können natürlich auch durch entsprechende Optiken erfolgen, über die eine Abbildung des Zielbereiches auf das Objektiv der Kamera 6 erfolgen kann.

So kann beispielsweise über schwenkbare Spiegel die Umgebung auf die Kamera abgebildet werden. Auch Linsen zur Modifikation des Strahlenganges und zum Aufweiten des Blickwinkels können eingesetzt werden, wobei sowohl die Linsen als auch die Spiegel auch in Abhängigkeit des jeweiligen Anwendungsfalles beweglich oder in der Brennweite veränderlich ausgebildet sein können.

Die oben genannte Optik kann auch einen Lichtwellenleiter umfassen, so dass die Kamera 6 auch an einer entfernten Stelle, möglicherweise sogar in der Karosserie des Kraftfahrzeugs 1, im gezeigten Ausführungsbeispiel beispielsweise in der Tür, angeordnet sein kann. In diesem Fall kann der Lichtwellenleiter längs des Blendenkörpers 3 bis zur Schwenkachse verlaufen oder im Bereich der Aufnahmeoptik in das Karosserieteil 2 geführt sein.

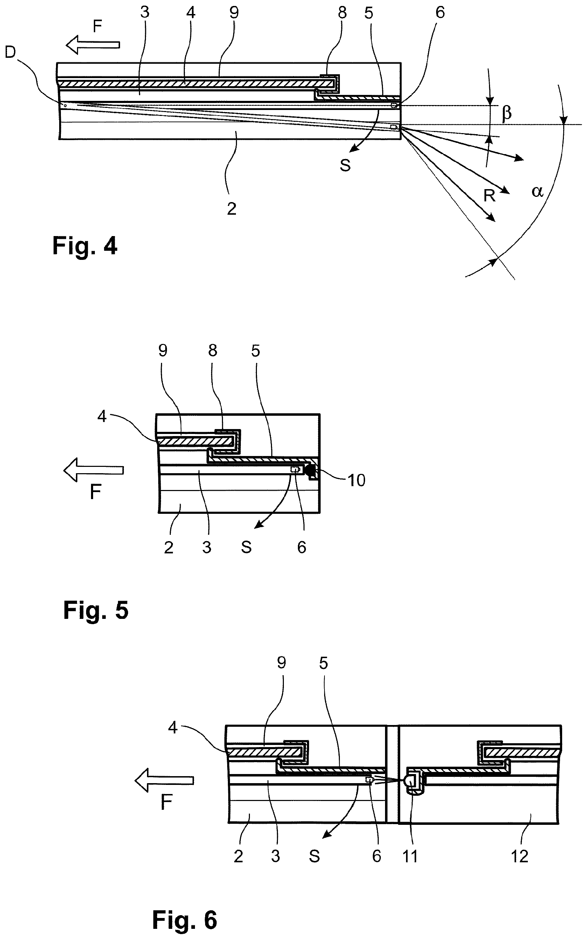

In Figur 4 ist die Grundfunktion der Kamera 6 für das Ausführungsbeispiel einer Schachtabdeckung des Fensterschachtes 9 eines als Tür ausgebildeten Karosserieteils 2 des Kraftfahrzeugs 1 schematisch in einer Ansicht von oben dargestellt.

Das Fahrzeug bewegt sich bei Vorwärtsfahrt in Fahrtrichtung F. Die Tür weist eine Scheibe 4 als Fenster auf, die in den Fensterschacht 9 abgesenkt werden kann. Im rechten Bereich ist die Führung der Scheibe 4 zu erkennen. Vor der Führung und dem vom Fenster nicht erfassten, hinteren Bereich der Tür befindet sich eine vertikale Blende 5. Der Blendenkörper 3 deckt sowohl den unteren Rand der vertikalen Blende 5 als auch den Fensterschacht 9 ab. Er ist um eine im vorderen Bereich des Blendenkörpers 3 angeordnete Schwenkachse D nach außen in Schwenkrichtung S schwenkbar an der Tür gelagert.

Durch die schwenkbare Lagerung um die Schwenkachse S wird der hintere Bereich des Blendenkörpers 3 um den Schwenkwinkel β nach außen verlagert. Die Größe dieses Schwenkwinkels β kann anwendungsoptimiert gewählt werden und sich auch je nach Verwendung der Kamera 6 ändern. Letztlich hängt die notwendige Größe dieses Schwenkwinkels β davon ab, wie weit angrenzende Bauteile des Kraftfahrzeugs 1 hervorstehen, also wie weit die Kamera 6 nach außen verlagert werden muss, um über diese vorstehenden Teile herüberblicken zu können, und natürlich welchen Bereich die Kamera 6 erfassen soll, um die jeweilige Funktion des Assistenten zu erfüllen.

Die Kamera 6 blickt hier in Blickrichtung R (in Figur 4 nur für den ausgefahren Zustand eingezeichnet) nach hinten, wobei ein Bildbereich in einem Winkel α erfasst wird, der hier ungefähr 55° beträgt. Dieser Winkel ermöglicht es, den rückwärtigen Verkehr, auch auf den Nachbarspuren, zu überwachen, so dass Spurwechselassistenten, Kollisionswarnassistenten oder ähnliche Anwendungen das Kamerabild nutzen können. Bei entsprechend großem Schwenkwinkel β kann auch ein Teil der eigenen Fahrspur hinter dem Kraftfahrzeug 1 eingesehen werden, so dass insbesondere in Verbindung mit der Vorsehung jeweils einer Kamera 6 auf beiden Seiten des Kraftfahrzeugs 1 auch der rückwärtige Verkehr oder auch ein am Kraftfahrzeug 1 angehängter Anhänger zumindest zum Teil erfasst werden kann.

Insbesondere dann, wenn die Kamera 6 die Funktion des Rückspiegels übernehmen oder sonstige sicherheitsrelevante Funktionen erfüllt soll, aber auch in allen anderen Fällen, kann es erwünscht sein, dass sich die Kamera 6 bzw. die Optik oder das Sichtfenster, also der Bereich, der von Umgebungsbedingungen verschmutzt werden könnte, selbsttätig zu reinigen vermag. Da während einer Regenfahrt verschmutztes Wasser durch den Fahrtwind längs der Fahrzeughaut nach hinten getrieben wird und sich im Bereich von Totwassergebieten sammeln könnte, kann es passieren, dass diese Wassermengen nachfolgend eintrocknen und sich so Schmutz, zum Beispiel Streusalz, auf der von der Kamera 6 zu durchblickenden Fläche sammeln kann.

In den Figuren 5 und 6 sind zwei beispielhafte, mögliche Lösungen für das oben genannte Problem dargestellt.

Figur 5 zeigt eine mechanische Lösung, bei der nach dem Prinzip einer Abziehlippe die möglicherweise der Verschmutzung ausgesetzten Oberfläche, also entweder die Kamera 6 selbst, ein von der Kamera 6 zu durchblickendes Sichtfenster oder eine die Umgebung auf die Kamera 6 abbildende Optik, von einem Abziehelement 10 gereinigt wird. Im hier dargestellten Ausführungsbeispiel ist das Abziehelement 10 als kleiner Gummikörper ausgebildet, der in einer Aufnahme in der vertikalen Blende 5 gehalten ist.

Das Abziehelement 10 ist so ausgebildet und positioniert, dass es während der Schwenkbewegung des Blendenkörpers 3 in Schwenkrichtung S in Kontakt zu der zu reinigen Oberfläche steht und entlang der zu reinigenden Oberfläche mit einer Abziehwirkung geführt ist. Hierdurch wird der Schmutz von der Oberfläche abgetragen, wenn sich der Blendenkörper 3 nach außen bewegt und die Kamera 6 aktiviert wird. Auch während der Fahrt des Kraftfahrzeugs 1 kann diese Funktion wiederholt genutzt werden, wobei der Blendenkörper 3 dann ausschließlich zu Reinigungszwecken periodisch oder in Abhängigkeit des Kamerasignals eingeklappt und wieder ausgefahren wird.

Die Reinigung kann auch durch aktiven Befehl des Fahrers, der hierzu einen entsprechenden Betätigungsknopf zur Auslösung betätigen kann. Insbesondere die selbsttätige Reinigung kann davon abhängig gemacht werden, ob ein im Kraftfahrzeug 1 verbauter Regensensor das Auftreten von Regen detektiert. Der in Figur 5 dargestellte Gummikörper als Abziehelement 10 ist dabei lediglich als Beispiel einer möglichen Ausgestaltung zu verstehen, hier können auch Bürsten oder sonstige mechanische Elemente verwendet werden, um eine mechanische Reinigung der Oberfläche zu gewährleisten.

Um eine Verschmutzung der Oberfläche schon im Ansatz zu vermeiden oder zumindest zu verringern kann eine entsprechende Beschichtung, zum Beispiel mit Lotus-Effekt, genutzt werden und bzw. oder der Blendenkörper 3 fluid- und aerodynamisch optimiert geformt sein, so dass sich entlang der Fahrzeughaut nach hinten getrieben das Wasser nicht vor der Oberfläche sammelt. Dies kann zum Beispiel erreicht werden, in dem der Blendenkörper 3 mit einem kleinen hinteren Flügel die Strömung von der Oberfläche der Kamera bzw. der Optik fernhält. Auch ein Spalt zwischen der Kamera bzw. der Optik und dem Blendenkörper 3 kann schon ausreichend sein, um zu verhindern, dass sich der Flüssigkeitswirbel im Spalt der Tür auf der Oberfläche niederschlägt.

Alternativ zum selbsttätig bei der Bewegung des Blendenkörpers 3 entlang der Oberfläche verfahrenden Abziehelementes 10 gemäß Figur 5 kann natürlich auch eine aktive Reinigungsvorrichtung in Form einer bewegten Bürste oder einer bewegten Abziehlippe Verwendung finden. Auch kann das Abziehelement 10 an der B-Säule des Kraftfahrzeugs 1 oder an der hinteren Tür vorgesehen sein, wobei dann Position und Form Abziehelementes 10 so gewählt sind, dass sich bei Öffnung der Tür der Reinigungseffekt ergibt.

Figur 6 zeigt eine weitere Ausgestaltung einer Reinigungsvorrichtung für die Kamera 6. Bei dieser Ausgestaltung ist ein aktives Sprühelement mit einer Reinigungsdüse 11 vorgesehen. Eine solche Reinigungsvorrichtung ist beispielsweise von der Scheinwerferreinigungsanlage oder auch von der Erfassungskamera eines Abstandsregelassistenten bereits bekannt. Im gezeigten Ausführungsbeispiel ist die Reinigungsvorrichtung in eine vertikale Blende 5 einer angrenzenden Tür oder, hier nicht dargestellt, in der Blende der B-Säule des Kraftfahrzeugs 1 angeordnet.

Die Anordnung in der B-Säule hat den besonderen Vorteil, dass diese nicht infolge der Öffnung der Türen bewegt wird, so dass sich die notwendige Reinigungsflüssigkeit, beispielsweise aus dem Tank der Scheibenwaschanlage, ohne Ermüdung des Zuführschlauches leicht zu führen lässt und gegebenenfalls auch die Pumpe der Scheibenwaschanlage genutzt werden kann, wobei dann bevorzugt bei jeder Betätigung der Scheibenwaschanlage auch die Kamera 6 gereinigt wird.

Die Reinigung der zu reinigenden Oberfläche erfolgt bei dieser Ausgestaltung durch einen Hochdruckstrahl, wie es von den oben genannten Scheinwerferreinigungsanlagen bekannt ist. Der Strahl kann unmittelbar und rechtwinklig auf die Oberfläche gerichtet sein oder auch einem Winkels hierzu, um den Schmutz seitlich abtragen zu können. Eine solche Ausgestaltung bietet sich auch für Varianten der Zierblende an, bei der der Blendenkörper 3 nicht schwenkbar gelagert ist, sondern feststehend an der Karosserie des Kraftfahrzeugs 1 befestigt ist.

Der in den Figuren 1 bis 4 dargestellte Blickwinkel α und die Blickrichtung R sind lediglich beispielhaft zu verstehen. Wie bereits in der vorhergehenden Beschreibung ausführlich dargelegt, können sowohl andere Blickwinkel α und Blickrichtungen R als auch eine Verstellbarkeit von Blickwinkel α und Blickrichtung R eingesetzt werden. Ferner kann durch die Verwendung mehrerer Kameras oder entsprechender Optiken, insbesondere durch die Verwendung von Weitwinkel- oder Fischaugenobjektiven von der Kamera 6 erfasste das Blickfeld vergrößert werden. Auch der Fokus der Kamera 6 kann verstellbar oder selbsttätig einstellbar sein.

Selbstverständlich können die Signale der Kamera nicht nur zur visuellen Information des Fahrers, sondern auch als Eingangsgröße einer Regelung zum autonomen Fahren oder zu anderen Zwecken genutzt werden.

### Bezugszeichenliste:

- 1: Kraftfahrzeug
- 2: Karosserieteil
- 3: Blendenkörper
- 4: Scheibe
- 5: Vertikale Blende
- 6: Kamera
- 7: Aufnahmeraum
- 8: Dichtung
- 9: Fensterschacht
- 10: Abziehelement
- 11: Reinigungsdüse
- 12: Weiteres Karosserieteil (benachbart zum Karosserieteil (2))

- α: Blickwinkel der Kamera
- β: Schwenkwinkel des Blendenkörpers

- R: Blickrichtung der Kamera
- F: Fahrtrichtung des Kraftfahrzeugs
- S: Schwenkrichtung des Blendenkörpers
- D: Schwenkachse des Blendenkörpers

## Patentansprüche

1. Zierblende für die Befestigung an einem Karosserieteil (2) eines Kraftfahrzeugs (1) mit einem Blendenkörper (3), der eine, dem Karosserieteil (2) zugewandte Innenseite, einen vorderen Endbereich und einen hinteren Endbereich sowie eine äußere Zierseite aufweist und an dem Karosserieteil (2) oder einem Anbauteil des Karosserieteils (2) des Kraftfahrzeugs (1) befestigbar ist, wobei der Blendenkörper (3) derart ausgebildet ist, dass bei bestimmungsgemäßer Montage an dem Kraftfahrzeug (1) ein Aufnahmeraum (7) innerhalb des Blendenkörpers (3) vorgesehen ist oder nach der Montage der Zierblende am Kraftfahrzeug (1) hinter der Innenseite des Blendenkörpers (3) als freier Raum verbleibt, **dadurch gekennzeichnet, dass**
der den Aufnahmeraum begrenzende Bereich des Blendenkörpers (3) im vorderen oder hinteren Endbereich des Blendenkörpers (3) vorgesehen ist und der Blendenkörper (3) derart ausgebildet ist, dass aus dem Aufnahmeraum die Umgebung des Endbereichs zumindest teilweise sichtbar ist, wobei in dem Aufnahmeraum eine Erfassungsoptik zum Erfassen eines zu überwachenden Bereichs außerhalb des Kraftfahrzeugs (1) durch eine Kamera (6) angeordnet ist, deren Blickrichtung (R) durch einen Randbereich des Blendenkörper gerichtet ist.

2. Zierblende für ein Kraftfahrzeug nach Anspruch 1, **dadurch gekennzeichnet, dass** der Blendenkörper (3) leistenförmig ist und zur Montage an einer Seite des Kraftfahrzeugs (1) vorgesehen ist, wobei die Blickrichtung (R) der Kamera (6) entgegen der Fahrtrichtung (F) oder in Fahrrichtung (F) gerichtet ist.

3. Zierblende für ein Kraftfahrzeug nach einem der beiden vorhergehenden Ansprüche, **dadurch gekennzeichnet, dass** die Kamera (6) einen Winkelbereich, der durch einen Winkel (α) zwischen einer zur Fahrtrichtung (F) parallelen oder leicht nach innen gerichteten Linie und einer von der Zierblende nach außen gerichteten Line definiert ist, wobei der Winkel (α) 90° oder weniger, bevorzugt weniger als 60° und besonders bevorzugt 55° beträgt.

4. Zierblende für ein Kraftfahrzeug nach einem der vorhergehenden Ansprüche, **dadurch gekennzeichnet, dass** die Kamera (6) in dem Aufnahmeraum (7) angeordnet ist und insbesondere ein Weitwinkel- oder eine Fischaugenobjektiv aufweist.

5. Zierblende für ein Kraftfahrzeug nach einem der vorhergehenden Ansprüche, **dadurch gekennzeichnet, dass** die Kamera (6) in einen geschlossenen, an dem Blendenkörper (3) angeordneten Kameragehäuse angeordnet ist, dass in Blickrichtung (R) der Kamera (6) ein Sichtfenster aufweist.

6. Zierblende für ein Kraftfahrzeug nach dem vorhergehenden Anspruch, **dadurch gekennzeichnet, dass** der Blendenkörper (3) zweiteilig ausgebildet ist, wobei ein erster Teil als langgezogener Zierabschnitt dient, an dessen hinteren oder vorderen Ende das Kameragehäuse angeordnet ist.

7. Zierblende für ein Kraftfahrzeug nach einem der vorhergehenden Ansprüche, **dadurch gekennzeichnet, dass** das Karosserieteil (2) eine Tür des Kraftfahrzeugs (1) ist, wobei die Zierblende eine Schachtabdeckung zur Abdeckung des Schachtes (9) zwischen einer, das Fenster der Tür bildenden Scheibe (4) und einem angrenzenden Türbereich ist.

8. Zierblende für ein Kraftfahrzeug nach dem vorhergehenden Anspruch, **dadurch gekennzeichnet, dass** die Schachtabdeckung einen blendenseitigen Scharnierbereich aufweist, der an dem Ende des Blendenkörpers (3) angeordnet ist, der dem Aufnahmeraum (7) abgewandt ist, so dass die Schachtabdeckung um eine Schwenkachse (D) schwenkbar an dem, ein korrespondierendes Scharnierbereich aufweisenden Kraftfahrzeug (1) montierbar ist.

9. Zierblende für ein Kraftfahrzeug nach einem der vorhergehenden Ansprüche, **dadurch gekennzeichnet, dass** die Kamera (6) in dem Aufnahmeraum (7) um die Längsachse des Blendenkörpers (3) und/oder um eine zur Längsachse des Blendenkörpers (3) rechtwinklige Achse mittelbar oder unmittelbar dreh- oder schwenkbar oder derart gelagert ist, dass die Kamera (6) quer zur Fahrrichtung aus dem Blendenkörper (3) herausfahrbar ist.

10. Zierblende für ein Kraftfahrzeug nach einem der vorhergehenden Ansprüche, **dadurch gekennzeichnet, dass** der Blendenkörper (3) zusätzlich zu der bei montierter Zierblende mit ihrer Blickrichtung nach vorne oder hinten ausgerichteten Kamera (6) eine Zusatzkamera aufweist, deren Blickrichtung bei montierter Zierblende nach unten gerichtet ist.

11. Kraftfahrzeug (1), **dadurch gekennzeichnet, dass** das Kraftfahrzeug (1) eine Zierblende nach einem der vorhergehenden Ansprüche aufweist.

12. Kraftfahrzeug (1) nach einem dem vorhergehenden Anspruch, **dadurch gekennzeichnet, dass** die Zierblende die Schachtabdeckung des Schachtes (9) zwischen der das Fenster einer Tür des Kraftfahrzeugs (1) bildenden Scheibe (4) und dem angrenzenden Türbereich ist, wobei in Fahrtrichtung (F) gesehen der Aufnahmeraum (7) und die Kamera (6) am hinteren Ende der Zierblende angeordnet sind.

13. Kraftfahrzeug (1) nach dem vorhergehenden Anspruch, **dadurch gekennzeichnet, dass** die Zierblende an einer Seite um eine Schwenkachse (D) schwenkbar an dem Karosserieteil des Kraftfahrzeugs (1) gelagert und elektromotorisch schwenkbar ist.

14. Kraftfahrzeug (1) nach dem vorhergehenden Anspruch, **dadurch gekennzeichnet, dass** ein relativ zur Bewegung der Zierblende feststehendes Abziehelement (10) zur Reinigung der Kamera (6) oder eines, die Kamera (6) abdeckendes Sichtfensters vorgesehen ist, dass mit einem elastischen Schabkörper bei eingeklappten Blendenkörper (3) oder während der Bewegung des Blendenkörpers (3) infolge der Schwenkbewegung an die Kamera (6) oder ein die Kamera (6) abdeckendes Sichtfenster abstreift und derart angeordnet ist, dass es sich bei maximalem Schwenken des Blendenkörpers nach außen nicht im Sichtfeld der Kamera (6) befindet.

15. Kraftfahrzeug (1) nach einem der beiden vorhergehenden Ansprüche, **dadurch gekennzeichnet, dass** es eine Reinigungsvorrichtung für die Kamera (6) aufweist, die von einer Reinigungsdüse (11) gebildet ist, wobei die Reinigungsdüse an dem Karosserieteil (2) oder einem benachbarten Karosserieteil (12) angeordnet ist und derart ausgebildet und ausgerichtet ist, dass sie einen Wasserstrahl auf die Kamera (6) oder ein die Kamera (6) abdeckendes Sichtfenster zu richten vermag.
